(19) Europäisches Patentamt
European Patent Office
Office européen des brevets

(11) EP 2 284 770 A1

(12) **EUROPEAN PATENT APPLICATION**

(43) Date of publication:
16.02.2011 Bulletin 2011/07

(51) Int Cl.:
$G06K\ 9/00$ (2006.01)  $G06K\ 9/46$ (2006.01)
$G06F\ 17/30$ (2006.01)

(21) Application number: 09386018.7

(22) Date of filing: 06.07.2009

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(71) Applicants:
• **Perantonis, Stavros**
**15237 Attiki (GR)**
• **Papadakis, Panagiotis**
**15351 Attiki (GR)**
• **Pratikakis, Ioannis**
**16451 Attiki (GR)**
• **Theoharis, Theoharis**
**14562 Attiki (GR)**

• **National Center for Scientific Research "Demokritos" Neapoleos &**
**15310 Athens (GR)**

(72) Inventors:
• **Papadakis, Panagiotis**
**15351 Attiki (GR)**
• **Pratikakis, Ioannis**
**16451 Attiki (GR)**
• **Theoharis, Theoharis**
**14562 Attiki (GR)**
• **Perantonis, Stavros**
**15237 Attiki (GR)**

Remarks:
Amended claims in accordance with Rule 137(2) EPC.

(54) **Method and system for content-based search and retrieval of 3D models using panoramic views**

(57) The present disclosure concerns a content-based 3D model search and retrieval method and system for queries in generic 3D model datasets. 3D model comparison is based on the extraction of a set of panoramic views that describe the surface position and orientation of the 3D objects. The panoramic views are obtained by projecting a 3D object to the lateral surfaces of a set of cylinders that are centered at the model's centroid and their axes are parallel to the model's principal axes which are determined by a rotation normalization method. The features that characterize each panoramic view are obtained by computing the 2D Discrete Fourier Transform and 2D Discrete Wavelet Transform.

(a)     (b)

(c)     (d)

Fig. 9

**Description**

FIELD OF THE INVENTION

The present invention describes a method and system for content-based search and retrieval of generic three dimensional models, using a representation that is based on panoramic views.

BACKGROUND ART OF THE INVENTION

Content-based (or query by example) 3D model search and retrieval is a procedure where a query is initiated using a 3D model that is compared against the 3D models of the dataset using a corresponding abstraction-signature which is called a shape descriptor. Thus, when a query model is submitted to the search system, the shape descriptor of the query 3D model is extracted and compared against the descriptors of all the models of the dataset to produce a sorted list of results according to a predefined measure of similarity.

Content-based 3D model search methods may be classified into two main categories according to the spatial dimensionality of the information used, namely 2D and 3D. In the first category, shape descriptors are generated from images-projections which may be depth buffers, silhouettes, geometry images or other kinds of 2D representations. Thus the similarity is measured using 2D shape matching techniques. In the second category, shape descriptors are extracted from 3D parameterizations of a model's shape and the similarity is measured using appropriate representations in the spatial domain or in the spectral domain.

The Light Field descriptor [1] is a state of the art method that belongs to the first category. It is generated by projecting the 3D model uniformly from the vertices of a dodecahedron. Each projection is composed of a combined feature vector of Zernike moments and Fourier coefficients and the distance between two models is computed by the minimal $L_1$ distance between all pairs of vertices under all possible rotations of the two dodecahedra. This method attempts to find the best correspondence between the compared models by exhaustive searching.

The Gaussian Euclidean Distance Transform descriptor [2] is a state of the art method that belongs to the second category. It is generated by computing the Gaussian Euclidean distance transformation of the volume of a 3D model and using the norms of spherical harmonic frequencies of the previous representation. To alleviate the rotation invariance problem properties of spherical harmonics are used.

Extended state of the art surveys on 3D model search methods can be found in [3], [4], [5], [6] and [7].

[1] D.Y. Chen, M. Ouhyoung, X.P. Tian, Y.T. Shen, On visual similarity based 3D model retrieval, in: Computer Graphics Forum, 2003, vol. 22, no. 4, pp. 223-232.

[2] M. Kazhdan, T. Funkhouser, S. Rusinkiewicz, Rotation invariant spherical harmonic representation of 3D shape descriptors, in: Eurographics/ACM SIGGRAPH Symposium on Geometry Processing, Aachen, Germany, 2003, pp. 156-164.

[3] B. Bustos, D. Keim, D. Saupe, T. Schreck, and D. V. Vranic, Feature-based similarity search in 3d object databases, ACM Computing Surveys, vol. 37, no. 4, pp. 345-387, 2005.

[4] P. Shilane, P. Min, M. Kazhdan, T. Funkhouser, The princeton shape benchmark, in Shape Modeling International, Los Alamitos, USA, 2004, pp. 167-178.

[5] N. Iyer, S. Jayanti, K. Lou, Y. Kalyanaraman, K. Ramani, Three-dimensional shape searching: state-of-the-art review and future trends, Computer-Aided Design, vol. 37, no. 5, pp. 509-530, 2005.

[6] J. Tangelder, R. Veltkamp, A survey of content based 3d shape retrieval methods, in Shape Modeling International, Los Alamitos, USA, 2004, pp. 145-156.

[7] Y. Yang, H. Lin, Y. Zhang, Content-based 3-d model retrieval: A survey, IEEE Transactions on Systems, Man, and Cybernetics, Part C: Applications and Reviews, vol. 37, no. 6, pp. 1081-1098, 2007.

DISCLOSURE OF THE INVENTION

The present invention provides a method and system for content-based search and retrieval of generic 3D models. For the purpose of content-based search and retrieval of 3D models, a 3D model is represented using a corresponding signature, i.e. a feature vector, which is called shape descriptor. The shape descriptor captures the characteristics of a 3D model by a set of features which are represented by numerical values. To estimate the similarity between two 3D models, their corresponding shape descriptors are compared using a predefined measure of similarity.

Brief description of the drawings

Fig. 1 demonstrates the steps of the pose normalization procedure of a 3D model, namely, translation normalization (Fig. 1(a)), rotation normalization (Fig. 1(b)) and scale normalization (Fig. 1(c)).

Fig. 2 shows a cylinder that is used to obtain a panoramic view of a 3D model.

Fig. 3 shows the discretization of the lateral surface of the cylinder according to the invention.

Fig. 4 shows the top-most cross section of the cylinder along with the set of rays emanating from the center of the cross-section according to the invention.

Fig. 5 shows example 3D models (Fig. 5 (a)) along with the corresponding panoramic views of their surface (Fig. 5 (b)) and the corresponding panoramic views of their surface orientation (Fig. 5(c)) according to the invention.

Fig. 6 shows an example 3D model (Fig. 6(a)) and the panoramic views of its surface using three cylinders whose axes are aligned to the coordinate axes z, y and x (Fig. 6(b),(c) and (d) respectively).

Fig. 7 shows a typical 2D Fourier Transform image (Fig. 7(a)) of a cylindrical projection and the Fourier coefficients that are excluded to reduce dimensionality (Fig. 7(b)) according to the invention.

Fig. 8 shows a 2-level 2D Wavelet Transform image of a cylindrical projection in negative colors.

Fig. 9 shows an example 3D model (Fig. 9(a)) and the panoramic views of its surface and surface orientation using three cylinders whose axes are aligned to the coordinate axes z, y and x (Fig. 9(b),(c) and (d) respectively).

Fig. 10 shows the system used for content-based search and retrieval of 3D models according to the invention.

Detailed description of the invention

In the following, the steps of the method for the computation of the 3D shape descriptor is given. Then the computation of a distance measure between 3D shape descriptors is described.

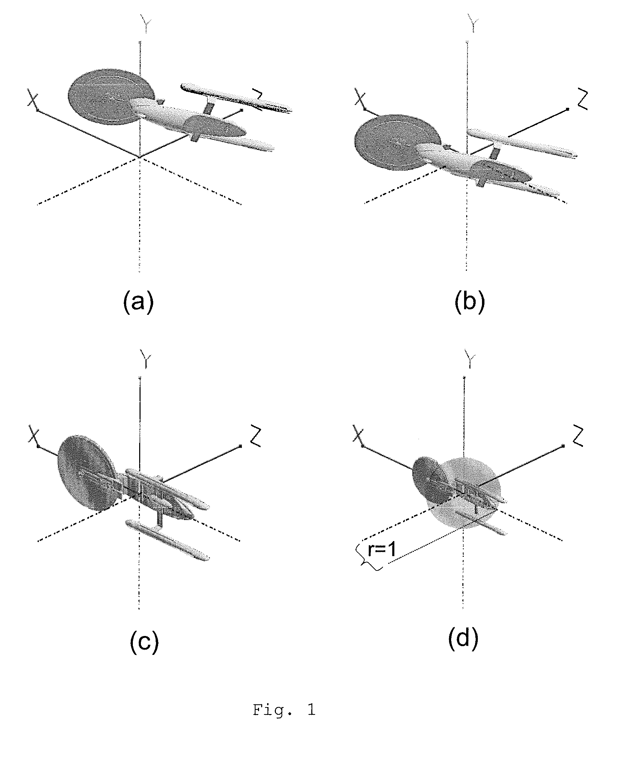

Before the extraction of the features, it is necessary to normalize the pose parameters of a 3D model (position, orientation and size) as these are arbitrarily set and are not considered to affect the shape similarity of 3D models. Thereupon, the final 3D shape descriptor should be invariant under translation, rotation and scaling. To address this issue the following steps are taken: (i) Translation normalization, (ii) Rotation normalization and (iii) Scale normalization. Figure 1 (a) shows an aeroplane 3D model, Figure 1 (b) shows the translation normalized model, Figure 1 (c) shows the rotation normalized model and Figure 1 (d) shows the scale normalized 3D model.

The translation normalization step positions a 3D model in a canonical coordinate frame such that the centroids of all 3D models coincide. Thereupon, each model is translated so that its centroid coincides with the coordinates' origin. We compute the centroid m of a polygonal model using the Continuous Principal Component Analysis (CPCA). For a 3D polygonal model consisting only of triangles, the centroid m is computed as:

$$\mathbf{m} = \frac{1}{E}\sum_{i=1}^{N} E_i \cdot (\mathbf{A}_i + \mathbf{B}_i + \mathbf{C}_i)/3 \qquad (1)$$

where $E$ is the total surface area of the 3D model, $E_{ji}$ is the surface area of the $i^{th}$ triangle, $N$ is the number of triangles and $\mathbf{A}_i$, $\mathbf{B}_i$ and $\mathbf{C}_i$ are the vertices of the $i^{th}$ triangle. If v is a vertex of the initial polygonal model, then the translated vertices v' of the model are given by $\mathbf{v}' = \mathbf{v} - \mathbf{m}$. This of course is also applicable to surface models that are built out of elementary components that are not triangles.

The aim of the rotation normalization step is to rotate each 3D model in such a way that when comparing two 3D models, their surfaces will coincide as much as possible with respects to all possible relative rotations. We use two alternative rotation normalization methods that are employed in a parallel fashion resulting into two alternative shape descriptors for a 3D object.

The first method, CPCA, considers the distribution of the surface area of a 3D model, taking as input the vertices of the triangles of the polygonal model. Then the PCA algorithm is applied to find the principal directions of the model's surface and rotate the model so that these directions coincide with the coordinate axes.

We use CPCA to compute the covariance matrix C of the model's surface, as follows:

$$\mathbf{C} = \frac{1}{12E}\sum_{i=1}^{N} E_i \cdot [f(\mathbf{A}_i) + f(\mathbf{B}_i) + f(\mathbf{C}_i) + 9 \cdot f((\mathbf{A}_i + \mathbf{B}_i + \mathbf{C}_i)/3)] \qquad (2)$$

 where $f(\mathbf{v}) = (\mathbf{v} - \mathbf{m})(\mathbf{v} - \mathbf{m})^T$ and $T$ denotes the transpose operation.

In the following, the eigenvectors of matrix **C** are computed, which represent the principal directions of the model's surface area. These vectors are then sorted according to the order of descending (or ascending) eigenvalues and are finally normalized to the Euclidean unit norm. A rotation matrix **R** is formed having as rows the scaled eigenvectors in descending (or ascending) order and **R** is applied to the model so that the principal directions of the model coincide with the coordinate axes. The new vertices v" of the 3D model after applying **R** are given by $\mathbf{v}" = \mathbf{R}^T\mathbf{v}'$.

The second method, Normal PCA (NPCA), considers the distribution of the surface orientation of a 3D model, taking as input the normal vectors of the model's triangles. The PCA algorithm is then applied as with the first method.

If $\mathbf{n}_i$ is the normal vector of triangle $T_i$ and $\mathbf{m}_{Nl}$ is the mean normal vector of all triangles, then the covariance matrix **C** is computed as:

$$\mathbf{C} = \frac{1}{2E}\sum_{i=1}^{N}\left( E_i(\mathbf{n}_i - \mathbf{m}_{Nl}) \cdot (\mathbf{n}_i - \mathbf{m}_{Nl})^T + E_i(-\mathbf{n}_i - \mathbf{m}_{Nl}) \cdot (-\mathbf{n}_i - \mathbf{m}_{Nl})^T \right) \qquad (3)$$

Each triangle is counted twice, using (i) its normal and (ii) opposite to the normal directions. This is done to avoid possible variations in the vertices ordering at the model triangles, that affects the direction's sign and because we may assume that every triangle has two sides with opposite directions. Adopting this, the mean normal vector $\mathbf{m}_{Nl}$ becomes:

$$\mathbf{m}_{Nl} = \frac{1}{2E}\sum_{i=1}^{N}(E_i \cdot \mathbf{n}_i + E \cdot (-\mathbf{n}_i)) = \mathbf{0} \qquad (4)$$

The above equation indicates that $\mathbf{m}_{Nl}$ is always the zero vector, thus **C** is now given by:

$$\mathbf{C} = \frac{1}{2E}\sum_{i=1}^{N}(E_i \cdot \mathbf{n}_i \cdot \mathbf{n}_i^T + E_i \cdot (-\mathbf{n}_i) \cdot (-\mathbf{n}_i^T)) = \frac{1}{E}\sum_{i=1}^{N}E_i \cdot \mathbf{n}_i\mathbf{n}_i^T \qquad (5)$$

After the computation of C, the PCA algorithm is applied to find and align the principal axes of the model with the coordinate axes. In particular, the eigenvectors of matrix C are computed, which represent the principal directions of the model's surface orientation. These vectors are then sorted according to the order of descending (or ascending) eigenvalues and are finally normalized to the Euclidean unit norm. A rotation matrix **R** is formed having as rows the scaled eigenvectors in descending (or ascending) order and **R** is applied to the model so that the principal directions of the model coincide with the coordinate axes. The new vertices **v"** of the 3D model after applying **R** are given by $\mathbf{v}" = \mathbf{R}^T\mathbf{v}'$.

At the scale normalization step, 3D models are scaled to a normalized size where the mean distance of the surface of the model to its centroid is fixed to predetermined value. The mean distance $d_{mean}$ is calculated using the diagonal elements of the covariance matrix which was computed at the rotation normalization step for CPCA. From the definition of the covariance matrix, the elements of the diagonal represent the variance of the distance of the model's surface in the x, y and z coordinate axes, thus $d_{mean}$ is given by:

$$d_{mean} = \sqrt{\mathbf{C}_{11}^{CPCA} + \mathbf{C}_{22}^{CPCA} + \mathbf{C}_{33}^{CPCA}} \qquad (6)$$

where $\mathbf{C}_{ij}^{CPCA}$ is the (i,j) element of the covariance matrix computed using CPCA. If we choose to set the mean distance of the scale normalized 3D models to be equal to one, then the new vertices $\mathbf{v}'''$ of a 3D model are now given by $\mathbf{v}'''=\mathbf{v}''/d_{mean}$.

After the completion of the pose normalization step, there are two pose normalized versions of the 3D model corresponding to the CPCA and the NPCA aligned version. The shape features are extracted for the CPCA aligned version and the NPCA aligned version. First, the shape features are extracted for the CPCA aligned version of the model and next for the NPCA aligned version. In the following, the detailed description for the extraction of the shape features set is given.

Extraction of panoramic views

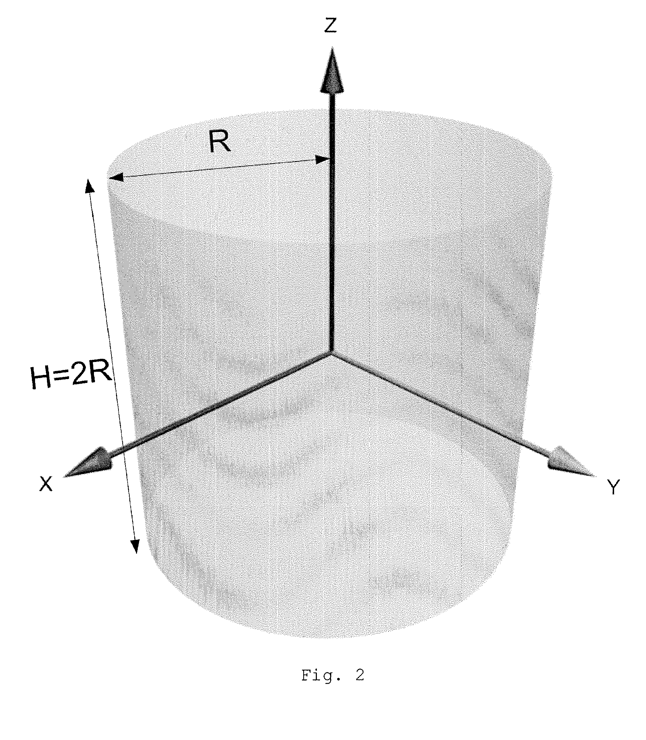

To obtain a panoramic view, we project the model to the lateral surface of a cylinder of radius $R$ and height $H = 2R,$ centered at the origin and parallel to one of the coordinate axes as shown in figure 2.

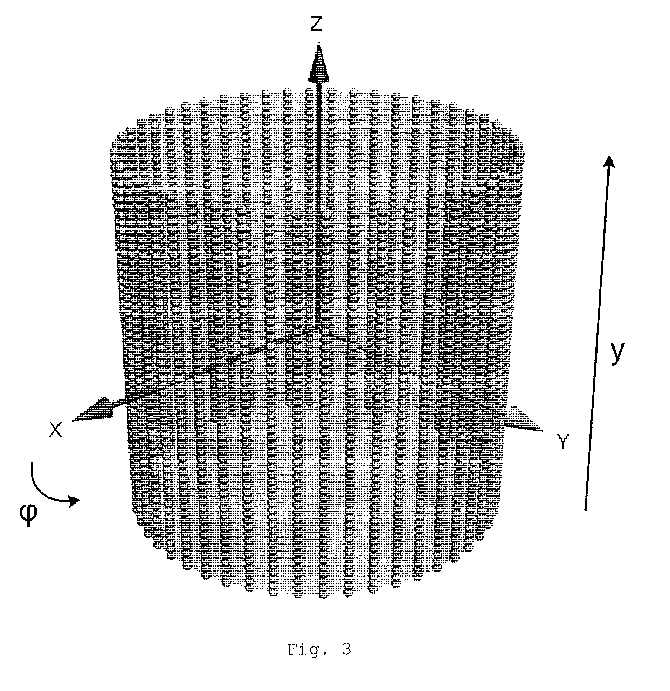

In the sequel, we parameterize the lateral surface of the cylinder using a set of points $S=\{s(\phi,y)|\phi\in[0,2\pi),y\in[0,H]\}$ where $\varphi$ is the angle measured counterclockwise in the XY plane, $y$ is measured from the bottom to the top of the cylinder and we sample the $\phi$ and $y$ variables at rates $2B$ and $B$, respectively. We sample the $\phi$ dimension at twice the rate of the $y$ dimension to account for the difference in length between the perimeter of the cylinder's lateral surface and its height. Thus we obtain the set of points $s(\phi_u,y_v)$ where $\phi_u=u\cdot2\pi/(2B)$, $y_v = v\cdot H/B$, $u \in [0,2B-1]$ and $v\in[0,B-1]$ (figure 3).

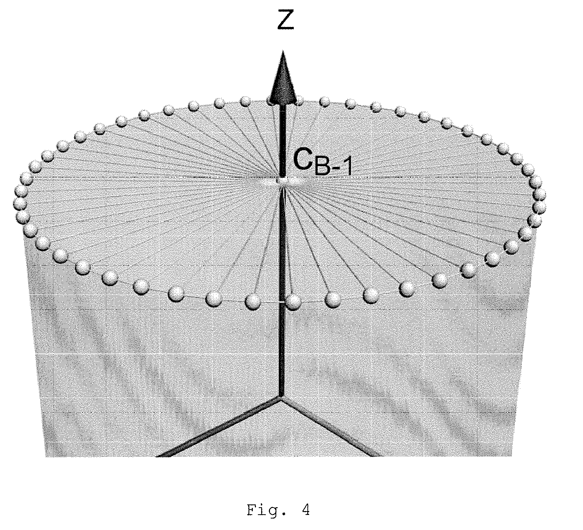

The next step is to determine the value at each point $s(\phi_u,y_v)$. The computation is carried out iteratively for $v = 0,1,...,B-1$, each time considering the coplanar $s(\phi_u,y_v)$ points i.e. a cross-section of the cylinder at height $y_v$ and for each cross-section we cast rays from its center $c_v$ in the $\phi_u$ directions. In figure 4, we show the points $s(\phi_u,y_v)$ of the topmost cross-section ($v = B - 1$) of the projection cylinder along with the respective rays emanating from the center of the cross-section.

The cylindrical projections are used to capture two characteristics of a 3D model's surface; (i) the position (depth) of the model's surface in 3D space and (ii) the orientation of the model's surface. To capture these characteristics we use two kinds of cylindrical projections $s_1(\phi_u,y_v)$ and $s_2(\phi_u,y_v)$. By default, the value of a point $s_k(\phi_u,y_v),k \in \{1,2\}$ is initially set to zero.

To capture the position of the model's surface, for each cross-section at height $y_v$ we compute the distances from $c_v$ of the intersections of the model's surface with the rays at each direction $\phi_u$.

Let $pos(\phi_u,y_v)$ denote the distance of the furthest from $c_v$ point of intersection between the ray emanating from $c_v$ in the $\phi_u$ direction and the model's surface, then:

$$s_1(\phi_u, y_v) = pos(\phi_u, y_v) \qquad (7)$$

Thus the value of a point $s_1(\phi_u,y_v)$ lies in the range $[0,R]$, where R denotes the radius of the cylinder. If the furthest point of intersection lies outside the cylinder, then we set $s_1(\phi_u,y_v) = R$.

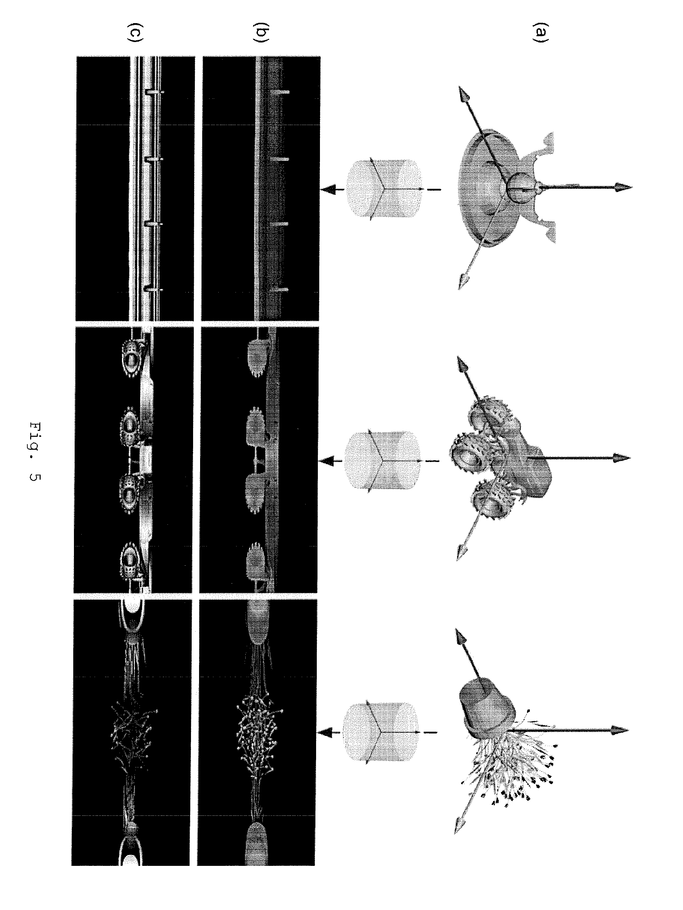

A cylindrical projection can be viewed as a 2D gray-scale image where pixels correspond to the $s_k(\phi_u,y_v)$ intersection points and their values are mapped to the [0,1] space. In figure 5 (a), we show example 3D models along with a projection cylinder aligned with the Z-axis. In figure 5 (b) the unfolded visual representation of its respective cylindrical projection $s_1(\phi_u,y_v)$ is given.

To capture the orientation of the model's surface, for each cross-section at height $y_v$ we compute the intersections of the model's surface with the rays at each direction $\phi_u$ and measure the angle between a ray and the normal vector of the triangle that is intersected. To determine the value of a point $s_2(\phi_u,y_v)$ we use the cosine of the angle between the ray and the normal vector of the furthest from $c_v$ intersected triangle of the model's surface even if the point of intersection lies outside the cylinder.

Let $ang(f_u,y_v)$ denote the aforementioned angle then the values of the $s_2(\phi_u,y_v)$ points are given by:

$$s_2(\phi_u, y_v) = \left| \cos(ang(\phi_u, y_v)) \right|^n \qquad (8)$$

In figure 5 (c) the unfolded visual representation of the cylindrical projection $s_2(\phi_u,y_v)$ is given for the models shown in figure 5 (a). Taking the absolute value of the cosine is also necessary since this setting is invariant to inconsistent directions of the normal vectors of the model's triangles along the model's surface.

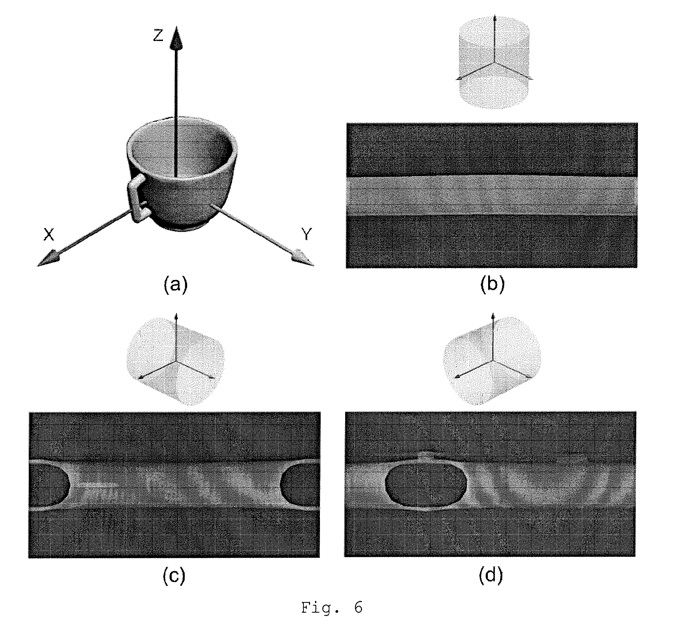

Although the cylindrical projection captures a large part of the shape of a model, a single cylindrical projection may not be able to capture concave parts. To alleviate this problem, we compute cylindrical projections from differently oriented cylinders, i.e. cylinders that are aligned with all coordinate axes in order to obtain a more informative 3D model representation. Thus, we project a 3D model to the lateral surfaces of three cylinders, each one aligned with a different coordinate axis as shown in figure 6 (b)-(d), which produces three sets of points $s_{k,t}(\phi_u,y_v)$ for $k \in \{1,2\}$, where $t \in \{x,y,z\}$ denotes the axis that the cylinder is aligned with. For the cylindrical projections that are aligned with the X and Y axes, the $\phi_u$ variable is measured at the YZ and ZX planes respectively while all other notations remain the same.

Feature representation of panoramic views

In this Section, we detail the procedure for the generation of a set of features that describe a panoramic view. Toward this goal, we use the 2D Discrete Fourier Transform and 2D Discrete Wavelet Transform.

2D discrete Fourier transform

For each cylindrical projection $s_{k,t}(\phi_u,y_v)$ ($k \in \{1,2\}$ and $t \in \{xr,y,z\}$), we compute the corresponding 2D Discrete Fourier Transform (DFT), which is given by:

$$F_{k,t}(m, n) = \sum_{u=0}^{2B\text{-}1} \sum_{v=0}^{B\text{-}1} s_{k,t}(\phi_u, y_v) \cdot e^{-2\pi\left(\frac{mu}{2B} + \frac{nv}{B}\right)} \qquad (9)$$

where $m \in [0,2B\text{-}1]$ and $n \in [0,B\text{-}1]$.

Since $s_{k,t}(\phi_u,y_v)$ is a real-valued function, the Hermitian symmetry property holds for the Fourier coefficients, i.e. $F_{k,t}(m, n) = F_{k,t}^{*}(2B - m, B - n)$, where $F^*$ denotes the complex conjugate. Hence, the size of the non-redundant information is a set of $(2B/\!/2+1)\cdot(B/2+1)$ Fourier coefficients for each projection. Next, we store the absolute values of the real and imaginary part of each coefficient and normalize the coefficients to the unit $L_1$ norm, which ensures scaling invariance.

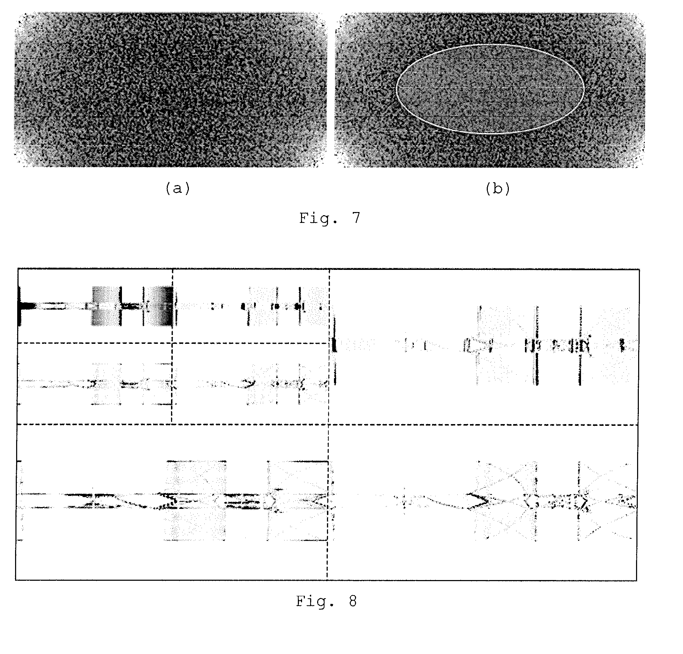

In practice, most of the energy of the Fourier coefficients is concentrated on the four corners of the image of the transform, as can be seen in figure 7 (a). Therefore, we only keep a subset of the full set of Fourier coefficients, i.e. those containing most of the energy. This can be straightforwardly done by considering an ellipse positioned at the center of the Fourier image and discarding all the coefficients that lie inside the ellipse, as shown in figure 7 (b). The number of low energy coefficients that are discarded depend on the desired level of dimensionality reduction.

After the completion of all previous operations, the resulting coefficients are denoted by $\widetilde{F}_{k,t}$. Thus, the final feature set $s_F$ of Fourier coefficients for a particular aligned version of a 3D object is denoted by:

$$\mathbf{s}_F = (\tilde{F}_{1,x}, \tilde{F}_{2,x}, \tilde{F}_{1,y}, \tilde{F}_{2,y}, \tilde{F}_{1,z}, \tilde{F}_{2,z}) \tag{10}$$

2D discrete wavelet transform

For each cylindrical projection $s_{k,t}(\phi_u, y_v)$ ($k \in \{1,2\}$ and $t \in \{x,y,z\}$), we compute the corresponding 2D Discrete Wavelet Transform (DWT), which is given by:

$$W_{k,t}^{\phi}(j_o, m, n) = \frac{1}{\sqrt{2B \cdot B}} \cdot \sum_{u=0}^{2B\text{-}1} \sum_{v=0}^{B\text{-}1} s_{k,t}(\phi_u, y_v) \cdot \phi_{j_o,m,n}(u, v) \tag{11}$$

$$W_{k,t}^{\psi}(j, m, n) = \frac{1}{\sqrt{2B \cdot B}} \cdot \sum_{u=0}^{2B\text{-}1} \sum_{v=0}^{B\text{-}1} s_{k,t}(\phi_u, y_v) \cdot \psi_{j,m,n}(u, v) \tag{12}$$

where $m \in [0, 2B\text{-}1]$, $n \in [0, B\text{-}1]$, $j \geq j_0$ is the scale of the multi-level DWT, $j_0$ is the starting scale and $\phi_{j_0,m,n}(u,v)$, $\psi_{j,m,n}(u,$ $v)$ is the scaling and wavelet function respectively. The $W_{k,t}^{\phi}(j_o, m, n)$ approximation-scaling coefficients correspond to the low-pass subband of the transform at the starting scale $j_0$. The $W_{k,t}^{\psi}(j, m, n)$ detail-wavelet coefficients correspond to the vertical, horizontal and diagonal subbands. We take the absolute values of the coefficients and normalize them to their $L_1$ norm. The resulting quantities are denoted as $\tilde{W}_{k,t}^{\phi}(j_o, m, n)$ and $\tilde{W}_{k,t}^{\psi}(j, m, n)$. In figure 8, we show the image of a 2-level wavelet transformation of a cylindrical projection.

In our implementation, we computed the DWT of each cylindrical projection up to the last level. In particular, since the resolution of a cylindrical projection is $(2B) \times (B)$, the total number of levels of the DWT are $\log_2 B$ and thus $j = 0, 1, ..., \log 2B - 1$.

To compute the DWT we have used the Haar and Coiflet (C6) filters (basis functions). Therefore, two distinctive DWTs are computed, the first using the Haar and the second using the Coiflet (C6) basis functions.

Instead of using directly the coefficients of the DWT as shape features, we compute a set of standard statistic image features that are listed below:

    i. Mean

$$\mu = \frac{1}{n_x n_y} \sum_{x=1}^{n_x} \sum_{y=1}^{n_y} I(x, y) \tag{13}$$

    ii. Standard deviation

$$\sigma = \sqrt{\frac{1}{n_x n_y} \sum_{x=1}^{n_x} \sum_{y=1}^{n_y} (I(x, y) - \mu)^2} \tag{14}$$

iii. Skewness

$$\beta = \frac{\frac{1}{n_x n_y} \sum_{x=1}^{n_x} \sum_{y=1}^{n_y} (I(x,y) - \mu)^3}{\sigma^3} \qquad (15)$$

where $n_x$, $n_y$ are the dimensions of an image $I(x,y)$.

In our case, the above features are computed for each subimage of the DWT, i.e. for each subband in every level of the DWT. Therefore, $I(x,y)$ is replaced by the $\tilde{W}_{k,t}^{\phi}(j_o, m, n)$ and $\tilde{W}_{k,t}^{\psi}(j, m, n)$ coefficients accordingly. Since we have $\log_2 B$ levels in the DWT, the total number of subbands per cylindrical projection is $(3 \cdot \log_2 B + 1)$. Hence, since we use two wavelet basis functions and three statistic image features, we obtain a total of $2 \cdot 3 \cdot (3 \cdot \log_2 B + 1)$ features per cylindrical projection which are denoted as $\tilde{V}_{k,t}$ and the final feature set $s_W$ for a particular aligned version of a 3D object is denoted as:

$$\mathbf{s}_W = (\tilde{V}_{1,x}, \tilde{V}_{2,x}, \tilde{V}_{1,y}, \tilde{V}_{2,y}, \tilde{V}_{1,z}, \tilde{V}_{2,z}) \qquad (16)$$

Features weighing and matching

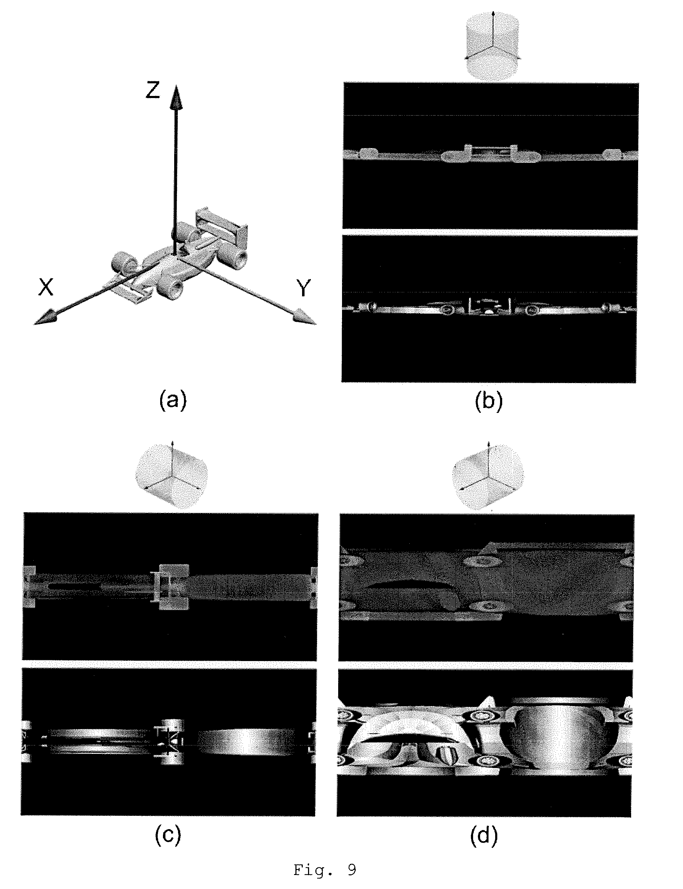

The features that were generated for each panoramic view are weighed by a factor $w_t$, according to the orientation of the cylinder (x, y or z) that was used to acquire the cylindrical projection. We apply this weighing based on the observation that not all cylindrical projections capture the same amount of information about the model's shape. The t-projection cylinder that is parallel to the t coordinate axis corresponds to one of the principal axes of the 3D model that were determined in the rotation normalization step. The amount of information that is captured by the t-cylindrical projection is directly related to the principal axes of the model that are encoded as is demonstrated in figure 9 for an example 3D model of a race car. In this example, the first, second and third principal axis of the object's surface is aligned with the X, Y and Z coordinate axis respectively, therefore the most informative cylindrical projection corresponds to the x-projection cylinder (figure 9 (d)), followed by the y-projection cylinder (figure 9 (c)) and the least informative z-projection cylinder (figure 9 (b)).

To compute the distance between the same aligned version (CPCA or NPCA) of two 3D objects, we compute the distances between the corresponding sets of features. We denote the feature set of a particular aligned version of an object by:

$$\mathbf{p}_l = (\mathbf{s}_{F,l}, \mathbf{s}_{W,l}), l \in \{cpca, npca\} \qquad (17)$$

and the full descriptor of the 3D object by:

$$\mathbf{P} = (\mathbf{p}_{cpca}, \mathbf{p}_{npca}) \qquad (18)$$

Considering the feature sets $\mathbf{p}_l$, $\mathbf{p'}_l$ of two 3D objects of the same aligned version $l$, the distance is computed by:

$$d_l(\mathbf{p}_l, \mathbf{p}_l') = a_F \cdot L_1(\mathbf{s}_{F,l}, \mathbf{s}_{F,l}') + a_W \cdot D_{can}(\mathbf{s}_{W,l}, \mathbf{s}_{W,l}') \qquad (19)$$

where $L_1(,)$, $D_{can}(,)$ denote the Manhattan and the Canberra distance respectively, normalized to the [0,1] range and $a_F$, $a_W$ correspond to the contribution of the Fourier features and wavelet-based features respectively. For two vectors $\mathbf{a} = (a_1, a_2, ..., a_N)$, $\mathbf{b} = (b_1, b_2, ..., b_N)$ the Canberra distance is computed as:

$$D_{can}(\mathbf{a}, \mathbf{b}) = \sum_{i=1}^{N} \frac{|a_i - b_i|}{|a_i| + |b_i|} \qquad (20)$$

The overall similarity between two 3D objects is measured by computing the distance between the sets of features of the same aligned version and the comparison that gives the minimum distance between the two alignments, sets the final score. Thus the overall distance $D(\mathbf{P}, \mathbf{P}')$ between two descriptors $\mathbf{P}$ and $\mathbf{P}'$ is given by:

$$D(\mathbf{P}, \mathbf{P}') = \min_l d_l(\mathbf{p}_l, \mathbf{p}_l'), \ l \in \{cpca, npca\} \qquad (21)$$

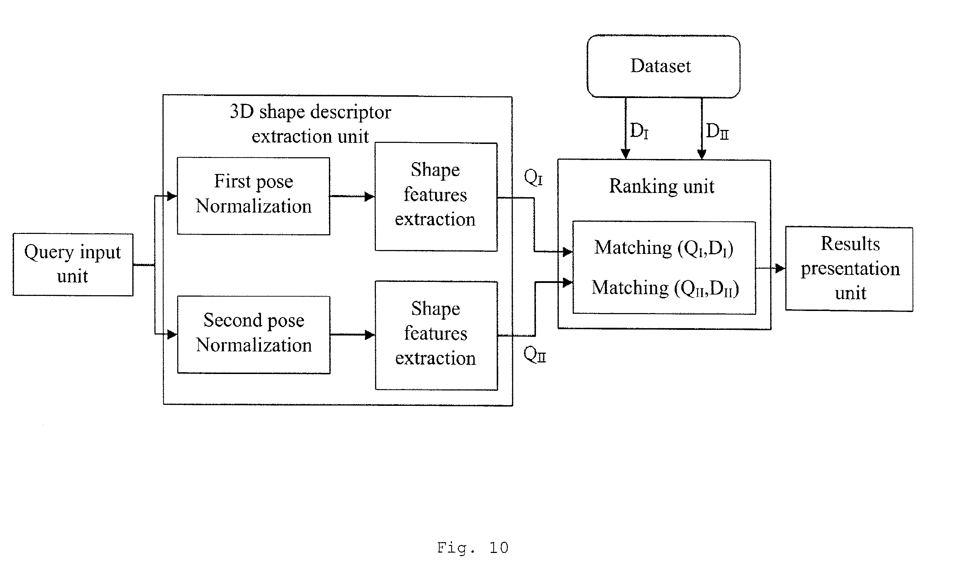

In the following, we describe the system which searches and retrieves 3D models within a dataset based on a query 3D model, as shown in figure 10.

The search and retrieval procedure is initiated when the user inputs a query 3D model to the system, using the query input unit. In order to compare the query 3D model against the models of the dataset, the 3D shape descriptor extraction unit computes the shape descriptor of the query 3D model. The 3D shape descriptor consists of a set of shape features which are computed for each pose normalized version of the 3D model. Then the ranking unit compares the descriptor of the query against the descriptor of each 3D model of the dataset, by matching the features of the respective pose normalized versions, giving a measure of the distance between the query and each 3D model of the dataset. Then the results presentation unit shows the 3D models of the dataset in a sorted list where the 3D models are sorted in decreasing order of their similarity to the query 3D model.

**Claims**

1. A content-based 3-dimensional (3D) model search and retrieval method using a 3D shape description which is extracted from the 3D model in the following steps: a. mapping of the 3D model's surface and orientation to the lateral surfaces of a set of cylinders, which constitute the model's panoramic views; b. computation of the 3D model's shape descriptor from the panoramic views which consists of a feature set that forms a vector of numerical values.

2. The method of claim 1, wherein the model's panoramic views are acquired by positioning three cylinders so that their centroids coincide with the model's centroid and their axes are parallel to the model's principal axes which are determined by a rotation normalization method.

3. The method of claim 1, wherein the 3D model's surface is mapped to the lateral surface of each of the cylinders and attributing to each mapped point its distance to the closest point of the 3D model's surface along the direction normal to the cylinder's surface.

4. The method of claim 1, wherein the 3D model's surface is mapped to the lateral surface of each of the cylinders and attributing to each mapped point a function of the angle between the normal to the cylinder's surface at the mapped point and the normal to the 3D model's surface at the closest point along the direction normal to the cylinder's surface.

5. The method of claim 1, wherein the feature set is computed by 2-dimensional (2D) transformations on the values attributed to the model's panoramic views as per claim 3 and 4, which form a 2D image for each panoramic view.

6. The method of claim 5, wherein the 2D transformation of the image of each panoramic view is the 2D Discrete Fourier Transform resulting in a set of Fourier coefficients that are normalized to their unit Lp norm.

7. The method of claim 5, wherein the 2D transformation of the image of each panoramic view is the 2D Discrete Wavelet Transform resulting in a set of Wavelet coefficients that are normalized to their unit $L_p$ norm and used to compute the moments of each subband of the corresponding wavelet transform.

8. The method of claim 1, wherein content-based 3D model search and retrieval is performed by extracting the 3D shape descriptor of a query 3D model and comparing the 3D shape descriptor of the query to the shape descriptors of a collection of 3D models.

9. The method of claim 8, wherein comparing the 3D shape descriptors of two 3D models is performed by computing the Lp distance or any other distance measure between the 2D Discrete Fourier Transform features of the two shape descriptors and/or the Canberra distance or any other distance measure between the 2D Discrete Wavelet Transform features of the two shape descriptors and/or combining the two distance scores.

10. A content-based 3D model search system comprising: a. a unit for the input of a query 3D polygonal model which is a user interface computer program; b. a unit for the extraction of a 3D shape descriptor from a 3D model employing the method as per claim 1; c. a ranking unit that ranks the 3D models of a dataset in descending order according to their similarity of their previously extracted 3D shape descriptors to the descriptor of the query 3D model, wherein the similarity of two shape descriptors is computed as per claim 9; d. a unit for the presentation of the ranked results which is a display device or a hard copy device.

**Amended claims in accordance with Rule 137(2) EPC.**

1. A content-based 3-dimensional (3D) model search and retrieval method using a 3D shape description which is extracted from the 3D model (a 3D model consists of i. a set of surface points and ii. A set of normal vectors which correspond to the surface points) in the following steps: a. mapping of the 3D model's surface points to the lateral surfaces of a set of cylinders, which constitute the model's panoramic views; b. mapping of the 3D model's normal vectors to the lateral surfaces of a set of cylinders, which constitute the model's panoramic views; c. computation of the 3D model's shape descriptor from the panoramic views which consists of a feature set that forms a vector of numerical values.

2. The method of claim 1, wherein the model's panoramic views are acquired by positioning three cylinders so that their centroids coincide with the model's centroid and their axes are parallel to the model's principal axes which are determined by a rotation normalization method.

3. The method of claim 1, wherein the 3D model's surface points are mapped to the lateral surface points of each of the cylinders and attributing to each mapped point its distance to the closest point of the 3D model's surface along the direction normal to the cylinder's surface.

4. The method of claim 1, wherein the 3D model's surface points are mapped to the lateral surface points of each of the cylinders and attributing to each mapped point a function of the angle between the normal to the cylinder's surface at the mapped point and the normal to the 3D model's surface at the closest point along the direction normal to the cylinder's surface.

5. The method of claim 1, wherein the feature set is computed by 2-dimensional (2D) transformations on the values attributed to the model's panoramic views as per claim 3 and 4, which form a 2D image for each panoramic view.

6. The method of claim 5, wherein the 2D transformation of the image of each panoramic view is the 2D Discrete Fourier Transform resulting in a set of Fourier coefficients that are normalized to their unit $L_p$ norm.

7. The method of claim 5, wherein the 2D transformation of the image of each panoramic view is the 2D Discrete Wavelet Transform resulting in a set of Wavelet coefficients that are normalized to their unit $L_p$ norm and used to compute the moments of each subband of the corresponding wavelet transform.

**8.** The method of claim 1, wherein content-based 3D model search and retrieval is performed by extracting the 3D shape descriptor of a query 3D model and comparing the 3D shape descriptor of the query to the shape descriptors of a collection of 3D models.

**9.** The method of claim 8, wherein comparing the 3D shape descriptors of two 3D models is performed by computing the $L_p$ distance or any other distance measure between the 2D Discrete Fourier Transform features of the two shape descriptors and/or the Canberra distance or any other distance measure between the 2D Discrete Wavelet Transform features of the two shape descriptors and/or combining the two distance scores.

**10.** A content-based 3D model search system comprising: a. a unit for the input of a query 3D polygonal model which is a user interface computer program; b. a unit for the extraction of a 3D shape descriptor from a 3D model employing the method as per claim 1; c. a ranking unit that ranks the 3D models of a dataset in descending order according to their similarity of their previously extracted 3D shape descriptors to the descriptor of the query 3D model, wherein the similarity of two shape descriptors is computed as per claim 9; d. a unit for the presentation of the ranked results which is a display device or a hard copy device.

(a)

(b)

(c)

(d)

r=1

Fig. 1

Fig. 2

Fig. 3

Fig. 4

Fig. 5

Fig. 6

(a)                                    (b)

Fig. 7

Fig. 8

(a)

(b)

(c)

(d)

Fig. 9

3D shape descriptor
extraction unit

Query input
unit

First pose
Normalization

Shape
features
extraction

$Q_I$

Second pose
Normalization

Shape
features
extraction

$Q_{II}$

Dataset

$D_I$    $D_{II}$

Ranking unit

Matching $(Q_I, D_I)$

Matching $(Q_{II}, D_{II})$

Results
presentation
unit

20

Fig. 10

Europäisches
Patentamt

European
Patent Office

Office européen
des brevets

**EUROPEAN SEARCH REPORT**

Application Number

EP 09 38 6018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/114252 A1 (RAMANI KARTHIK [US] ET AL) 1 June 2006 (2006-06-01)<br>* paragraph [0042] - paragraph [0050] *<br>* paragraph [0087] - paragraph [0090] *<br>* paragraph [0127] *<br>----- | 1-10 | INV.<br>G06K9/00<br>G06K9/46<br>G06F17/30 |
| A | DARAS P ET AL: "3D model watermarking for indexing using the generalized radon transform"<br>3D DATA PROCESSING, VISUALIZATION AND TRANSMISSION, 2004. 3DPVT 2004. PROCEEDINGS. 2ND INTERNATIONAL SYMPOSIUM ON THESSALONIKI, GREECE 6-9 SEPT. 2004, PISCATAWAY, NJ, USA,IEEE,<br>6 September 2004 (2004-09-06), pages 102-109, XP010725089<br>ISBN: 978-0-7695-2223-4<br>* abstract *<br>* page 102, column 1, paragraph 2 *<br>* page 103, column 1, paragraph 3 - column 2, paragraph 2 *<br>* figure 1 *<br>----- | 1-10 | |
| A | DARAS P ET AL: "Efficient 3-D model search and retrieval using generalized 3-D Radon transforms"<br>IEEE TRANSACTIONS ON MULTIMEDIA, IEEE SERVICE CENTER, PISCATAWAY, NJ, US,<br>vol. 8, no. 1,<br>1 February 2006 (2006-02-01), pages 101-114, XP002497466<br>ISSN: 1520-9210<br>* abstract *<br>* page 103, column 1, paragraph 4 *<br>* page 104, column 1, paragraph 2 - paragraph 4 *<br>* page 106, column 1, paragraph 2 *<br>* figure 4 *<br>----- | 1-10 | TECHNICAL FIELDS SEARCHED (IPC)<br><br>G06K<br>G06F |

The present search report has been drawn up for all claims

| Place of search | Date of completion of the search | Examiner |
|---|---|---|
| Munich | 26 November 2009 | Turina, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                      EP 09 38 6018

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2009

| Patent document cited in search report | Publication date | Patent family member(s) | Publication date |
|---|---|---|---|
| US 2006114252 A1 | 01-06-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D.Y. Chen ; M. Ouhyoung ; X.P. Tian ; Y.T. Shen.** On visual similarity based 3D model retrieval. *Computer Graphics Forum,* 2003, vol. 22 (4), 223-232
- **M. Kazhdan ; T. Funkhouser ; S. Rusinkiewicz.** Rotation invariant spherical harmonic representation of 3D shape descriptors. *Eurographics/ACM SIGGRAPH Symposium on Geometry Processing,* 2003, 156-164
- **B. Bustos ; D. Keim ; D. Saupe ; T. Schreck ; D. V. Vranic.** Feature-based similarity search in 3d object databases. *ACM Computing Surveys,* 2005, vol. 37 (4), 345-387

- **P. Shilane ; P. Min ; M. Kazhdan ; T. Funkhouser.** The princeton shape benchmark. *Shape Modeling International,* 2004, 167-178
- **N. Iyer ; S. Jayanti ; K. Lou ; Y. Kalyanaraman ; K. Ramani.** Three-dimensional shape searching: state-of-the-art review and future trends. *Computer-Aided Design,* 2005, vol. 37 (5), 509-530
- **J. Tangelder ; R. Veltkamp.** A survey of content based 3d shape retrieval methods. *Shape Modeling International,* 2004, 145-156
- **Y. Yang ; H. Lin ; Y. Zhang.** Content-based 3-d model retrieval: A survey. *IEEE Transactions on Systems, Man, and Cybernetics, Part C: Applications and Reviews,* 2007, vol. 37 (6), 1081-1098